Europäisches Patentamt

European Patent Office

Office européen des brevets

(19)

(11) Veröffentlichungsnummer: **0 423 539 A2**

## (12) EUROPÄISCHE PATENTANMELDUNG

(21) Anmeldenummer: 90118918.3

(22) Anmeldetag: 04.10.90

(51) Int. Cl.⁵: **B29C 45/14**

(30) Priorität: 17.10.89 DE 3934550

(43) Veröffentlichungstag der Anmeldung:
24.04.91 Patentblatt 91/17

(84) Benannte Vertragsstaaten:
**BE DE ES FR GB IT SE**

(71) Anmelder: **Gebr. Happich GmbH
Postfach 10 02 49 Clausenbrücke 1
W-5600 Wuppertal 1(DE)**

(72) Erfinder: **Irrgang, Manfred
In der Beek 47 A
W-5600 Wuppertal 1(DE)**

(54) Herstellverfahren für insbesondere an Fahrzeugen anzubringende Profilleisten.

(57) Es wird ein Herstellverfahren für insbesondere Profilleisten beschrieben, wobei die Profilleisten aus einem spritzgegossenen Profilleistenkörper mit einem rückseitigen Stützkörper aus bleibend verformbaren Material bestehen und einen rückseitigen C-förmigen Durchlaufkanal mit in den Kanalhohlraum hineinragenden Vorsprüngen aufweisen. Erfindungsgemäß ist vorgesehen, daß eine Spritzgußform verwendet wird, die im Auflagebereich des Stützkörpers mit etwa den Abmessungen der Vorsprünge entsprechenden sickenförmigen Vertiefungen ausgebildet ist und daß die Vorsprünge durch Einbringen des fließfähigen Kunststoffes mit Spritzdruck in das Formnest und dadurch bedingtes Einbringen von Stützkörpermaterial in die Formvertiefungen am Stützkörper angeformt werden.

EP 0 423 539 A2

# HERSTELLVERFAHREN FÜR INSBESONDERE AN FAHRZEUGEN ANZUBRINGENDE PROFILLEISTEN

Die Erfindung sich auf ein Herstellverfahren für insbesondere an Fahrzeugen anzubringende Profilleisten od. dgl., die jeweils aus einem spritzgegossenen Profilleistenkörper mit einem rückseitigen Stützkörper aus bleibend verformbaren Material, insbesondere Metallstreifen, bestehen und einen rückseitigen, in Längsrichtung verlaufenden C-förmigen Kanal mit in den Kanalhohlraum hineinragenden wulstartigen Vorsprüngen, die im Stützkörper ausgebildet sind, aufweisen, wobei der Stützkörper in das Formnest einer Spritzgußform eingelegt und sodann ein fließfähiger Kunststoff in das Formnest eingebracht wird.

Nach einem bekannten Herstellverfahren, vergleiche z.B. DE-A1- 29 44 478, werden Profilleisten für Fahrzeuge dadurch gebildet, daß man ein z.B. durch Rollformen profiliertes Metallband durch den Spritzkopf eines Querkopfextruders führt und mit Kunststoffmaterial umspritzt. Bei einem anderen bekannten Herstellverfahren, wie es z.B. in der DE-A1- 32 27 053 beschrieben ist, wird ein z.B. durch Rollformen profiliertes Metallband auf Länge geschnitten, in das Formnest einer Kunststoffspritzgußform eingelegt und sodann mit fließfähigem Kunststoff umspritzt oder hinterspritzt, wobei auch zugleich geschlossene Profilleistenenden angeformt werden können.

Die Profilleisten weisen häufig, und zwar unabhängig davon, ob sie im Extrusion- oder Spritzgußverfahren hergestellt worden sind, einen rückseitigen, in Längsrichtung verlaufenden C-förmigen Kanal zur Aufnahme von Befestigungsklipsen oder dergleichen auf, die zur Befestigung der Profilleisten an einer Fahrzeugkarosserie dienen.

Es ist auch bekannt, vergleiche z.B. die DE-A1- 29 44 478 oder DE-A1-30 01 942, im C-förmigen Kanal Verschiebebegrenzungen für jeden einzelnen Befestigungsklips vorzusehen, um jedem Befestigungsklips in einer vorbestimmten Montagebereitschaftsstellung vormontieren und halten zu können. Üblicherweise sind die in den C-förmigen Kanälen vorgesehenen Verschiebebegrenzungen als aus dem Metallband freigeschnittene und herausgebogene Federzungen oder als aus dem Metallband herausgeprägte Vorsprünge in Form von Wülsten, Warzen od. dgl. ausgebildet. Diese bekannte Herstellart der Verschiebebegrenzungen ist - bedingt durch die Vielzahl der Verfahrensschritte - aufwendig und teuer. Zudem stellt sich das Problem von Ungenauigkeiten bzw. Toleranzfehlern ein.

Der Erfindung liegt daher die Aufgabe zugrunde, das Herstellungsverfahren der eingangs genannten Art zu vereinfachen und zu verbilligen und insbesondere dafür Sorge zu tragen, daß die in den Kanalhohlraum hineinragenden wulstartigen Vorsprünge eine exakte Positionsgenauigkeit erhalten.

Gelöst wird diese Aufgabe durch die im kennzeichnenden Teil des Patentanspruchs angegebenen Merkmale, wonach vorgesehen ist, daß eine Spritzgußform verwendet wird, die im Auflagebereich des Stützkörpers mit etwa den Abmessungen der Vorsprünge entsprechenden sickenförmigen Vertiefungen ausgebildet ist und daß die Vorsprünge durch Einbringen des fließfähigen Kunststoffes mit Spritzdruck in das Formnest und hierdurch bedingtes Einbringen von Stützkörpermaterial in die Formvertiefungen am Stützkörper angeformt werden.

Wie sich überraschend gezeigt hat, ist auf diese Weise die einwandfreie und stets positionsgenaue Ausbildung der der Verschiebebegrenzung von Befestigungsklipsen od. dgl. dienenden wulstartigen Vorsprünge gleichzeitig mit dem Spritzgießen des Profilleistenkörpers zu bewerkstelligen. Damit entfallen Investitions- und Fertigungskosten für einen bisher erforderlich gewesenen kompletten Arbeitsgang, der nunmehr während des Formenfüllvorgangs durch den Forminnendruck automatisch mit ausgeführt wird.

Eine nach dem erfindungsgemäßen Verfahren hergestellte Profilleiste ist in der Zeichnung dargestellt und es zeigen

Fig. 1 ein Querschnitt durch die Profilleiste und
Fig. 2 einen Schnitt folgend der Linie II - II in Fig. 1.

Die in der Zeichnung dargestellte Profilleiste kommt insbesondere an Fahrzeugen als Scheuer-, Schutz- oder Zierleiste zur Anwendung. Die Profilleiste besteht aus einem Kunststoffkörper 1 und aus einem Stützkörper 2. Der Stützkörper 2 ist aus einem bleibend verformbaren Material, insbesondere aus einem kaltverformbaren Metallstreifen gebildet.

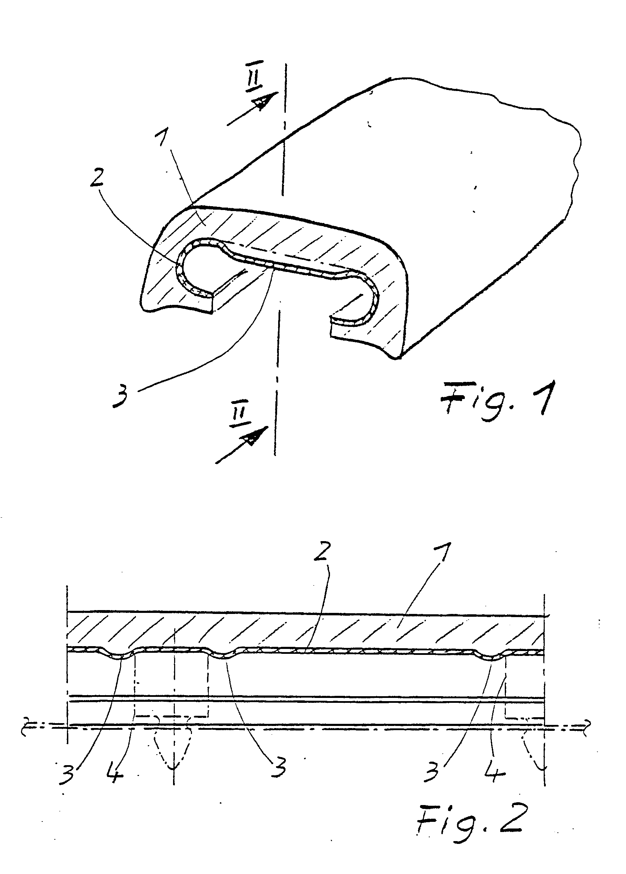

Bei der Herstellung der neuen Profilleiste wird wie folgt verfahren: Zunächst wird ein flaches Metallband durch geeignete Mittel, vorzugsweise Rollformen im Durchlaufverfahren verformt und erhält dabei eine aus Fig. 1 ersichtliche C-Form. Das rollgeformte Metallband wird hiernach intermitierend auf gewünschte Längen abgelängt. Danach wird jeweils ein rollgeformter Metallbandabschnitt in das Formnest einer nicht dargestellten Kunststoff-Spritzgußform eingelegt und sodann ein fließfähiger Kunststoff mit Spritzdruck in das Formnest eingebracht. Dabei werden am Steg des Stützkörpers 2 wulstartige Vorsprünge 3, die quer zur Profilleistenlängsachse ausgerichtet sind, mit exakter werkzeuggegebener Positionsgenauigkeit angeformt. Dies erfolgt zum einen durch den Spritzdruck des Kunststoffmaterials und zum anderen sickenförmige Vertiefungen im Stützkörper-Auflagebereich des Formwerkzeuges. Das Stützkörpermaterial wird durch den Spritzdruck in die Formvertiefungen gezwungen und dabei über die Elastizitätsgrenze hinaus und damit bleibend verformt.

Zwischen zwei einander nahe benachbarten Vorsprüngen 3 kann nunmehr ein, in der Zeichnung durch gestrichelte Linien angedeuteter Befestigungsklips mit dem Querschnitt des Stützkörpers 2 angepaßten Abmessungen montiert werden, der dann durch die Vorsprünge 3 verschiebefest positioniert und gehalten ist. Die Vorsprünge 3 brauchen, um ihre Funktion zu erfüllen nur geringfügig z.B. 0,5 bis 1 mm aus der Stegebene des Stützkörpers 2 hervorzutreten.

Die Erfindung bezieht sich bevorzugt auf die Herstellung von Profilleisten. Jedoch liegt es auf der Hand und damit auch im Rahmen der Erfindung auch andere Spritzgußartikel z.B. Fahrzeugverkleidungsteile mit bleibend verformbaren Einlegern entsprechend der erfindungsgemäßen Lehre herzustellen.

## Ansprüche

Herstellverfahren für insbesondere an Fahrzeugen anzubringende Profilleisten od. dgl., die jeweils aus einem spritzgegossenen Profilleistenkörper mit einem rückseitigen Stützkörper aus bleibend verformbaren Material, insbesondere Metallstreifen, bestehen und einen rückseitigen, in Längsrichtung verlaufenden C-förmigen Kanal mit in den Kanalhohlraum hineinragenden wulstartigen Vorsprüngen, die im Stützkörper ausgebildet sind, aufweisen, wobei der Stützkörper in das Formnest einer Spritzgußform eingelegt und sodann ein fließfähiger Kunststoff in das Formnest eingebracht wird, dadurch gekennzeichnet, daß eine Spritzgußform verwendet wird, die im Auflagebereich des Stützkörpers mit etwa den Abmessungen der Vorsprünge entsprechenden sickenförmigen Vertiefungen ausgebildet ist und daß die Vorsprünge durch Einbringen des fließfähigen Kunststoffes mit Spritzdruck in das Formnest und dadurch bedingtes Einbringen von Stützkörpermaterial in die Formvertiefungen am Stützkörper angeformt werden.

Fig. 1

Fig. 2

4